# EUROPEAN PATENT SPECIFICATION

(11) **EP 2 204 592 B1**
(45) Date of publication and mention of the grant of the patent: **03.04.2019**
(21) Application number: 08841035.2
(22) Date of filing: 23.10.2008
(51) Int. Cl.: F16F 9/32, B60J 5/04, E05B 1/00, F16F 9/02, F16F 9/34, E05B 77/42, E05B 85/12, F16F 9/516

(54) **DAMPER AND DOOR HANDLE WITH THE SAME**
DÄMPFER UND TÜRGRIFF MIT DEM DÄMPFER
AMORTISSEUR ET POIGNÉE DE PORTE LE COMPORTANT

(30) Priority: 25.10.2007 JP 2007277492
(43) Date of publication of application: 07.07.2010
(73) Proprietor: Nifco Inc., Kanagawa, 239-8560 (JP)
(72) Inventor: SETO, Yasuhiko, Yokosuka-shi Kanagawa 239-8560 (JP); JINBO, Naoto, Yokosuka-shi Kanagawa 239-8560 (JP)
(74) Representative: Dr. Gassner & Partner mbB
(86) International application number: PCT/JP2008/069214
(87) International publication number: WO 2009/054444

(56) References cited:
- EP-A1- 0 592 341
- JP-A- 2000 054 692
- JP-A- 2000 065 116
- JP-A- 2000 170 816
- JP-A- 2000 170 816
- JP-A- 2004 098 712
- JP-A- 2005 240 824
- JP-B- 2 696 208
- JP-U- 1 112 262
- JP-U- 1 138 293
- JP-U- 4 096 634
- US-A- 6 062 352

## Description

### Field of Technology

This invention relates to an air damper and a door handle with this air damper.

### Background Art

Conventionally, an air damper obtaining a damping effect by compressing the air inside a cylindrical cylinder using a piston, is well-known.
A conventional air damper is known from JP 2000 170 816 A. In addition, air dampers are also disclosed in US 6 062 352 A and EP 0 592 341 A1.

For example, in Patent Document 1, a braking force in one direction is activated effectively by providing an annular groove on an outer circumferential surface of the piston which moves inside the cylinder, and placing a seal ring which slides and contacts an inner circumferential wall of the cylinder inside the groove so as to be movable within the groove. Also, in Patent Document 2, a damping effect can be obtained by providing a return check valve communicating two air chambers which are divided by the piston, and opening and closing the return check valve according to the direction of movement of the piston. Additionally, in Patent Document 3, a damping force is changed according to the movement direction of the piston by providing a conical orifice in the central portion of the piston.
Patent Document 1: Japanese Unexamined Patent Publication No. 2005-240824
Patent Document 2: Japanese Patent No. 2696208
Patent Document 3: Japanese Unexamined Patent Publication No. 2000-54692

### Disclosure of the Invention

### Problems to be Solved by the Invention

The present invention provides an air damper which restrains the emission of noise which is generated when the piston moves with the features of claim 1, and a door handle associated with this air damper with the features of claim 4.

### Means for Solving the Problems

In a first aspect of the present invention, an air damper is provided including a cylinder whose opening portion is formed in one end portion; a piston housed inside the cylinder so as to enable it to reciprocate therein, and to compress the air inside an air chamber formed inside the cylinder; a rod connected to the piston and extending out of the cylinder; a seal member provided in the piston to slidingly contact an inner circumferential wall of the cylinder; an air passageway provided between the seal member and the piston and mutually communicating a space which is divided by the piston; and a cap disposed in the opening portion of the cylinder, the cap forming a pass-through opening wherein the rod can penetrate, and having approximately the same internal dimension of the pass-through opening and the external dimension of the rod.

In this embodiment, the piston is inserted into the cylinder wherein the opening portion is formed in one end portion, and reciprocated so as to compress the air inside the air chamber formed inside the cylinder. In this manner, the air inside the air chamber is compressed so that a damping effect is applied to the piston.

The rod is connected to the piston, and exposed from the cylinder. Also, the seal member slidingly contacting the inner circumferential wall of the cylinder is provided in the piston, and the air passageway mutually communicating the space which is divided by the piston, is provided between the seal member and a piston member. Since the space which is divided by the piston through this air passageway is in mutual communication, the piston member can be substantially reciprocated inside the cylinder.

Additionally, the cap is disposed in the opening portion of the cylinder. In this cap, the pass-through opening wherein the rod can penetrate, is formed, and the internal dimension of the pass-through opening and the external dimension of the rod are approximately the same.

Here, "the internal dimension of the pass-through opening and the external dimension of the rod are approximately the same" indicates that, since at least the rod is movable within the pass-through opening, the external dimension of the rod never becomes larger than the internal dimension of the pass-through opening. For example, even if they are set to have the same dimension, the internal dimension of the pass-through opening is formed with a plus tolerance, and the external dimension of the rod is formed with a minus tolerance. Also, an internal shape of the pass-through opening may have a round shape or an angular shape. Accordingly, an external shape of the rod has a shape which fits into the internal shape of the pass-through opening.

When the piston is pushed into the cylinder, the air moved around to the outside of the rod escapes through a gap between the rod and the cylinder and through the air passageway. However, by providing the cap in the opening portion of the cylinder and making the gap between the pass-through opening of the cap and the rod as small as possible (making the internal shape of the pass-through opening and the external dimension of the rod approximately the same), the emission of noise which is generated inside the cylinder can be attenuated.

Here, since the cylinder requires a length for a stroke of the piston, and forms a shape only whose one end portion has an opening, one end side and the other end side of the cylinder vary in strength as well. However, the approximately annular cap is provided in the opening portion of the cylinder and the length of the cap is made shorter than that of the cylinder, so that a dimensional accuracy can be enhanced compared to that of the cylinder.

Additionally the pass-through opening forms an approximately cylindrical shape, the rod is constituted by including an axial core portion connected to the piston and a plurality of wall portions projecting from the axial core portion and structuring the external shape of the rod, and the wall portions are formed in an approximately circular plate shape, and an external diameter dimension of the wall portions is approximately the same as an internal diameter dimension of the pass-through opening or the cylinder.

In the above-mentioned structure, the plurality of wall portions projects from the axial core portion connected to the piston, and constitutes the external shape of the rod. The wall portions are made in an approximately circular plate shape, and the external diameter dimension of the wall portions is approximately the same as the internal diameter dimension of the pass-through opening or the cylinder which forms the approximately cylindrical shape.

In the case of a solid rod, when the rod is formed by abrasion or the like, there is no problem with a dimension accuracy of the surface of the rod. However, in the case where the rod is formed by molding, the surface of the rod shrinks, so that it is difficult to provide the dimension accuracy.

Consequently, by providing the walls with the approximately circular plate shape, i.e., a thin section area is provided between the wall portion and the wall portion, so that the shrinkage of the rod is restrained, and the accuracy of the external diameter dimension of the rod (wall portions) can be enhanced. Also, by integrally providing the wall portions with the rod, the number of parts never increases.

According to the invention an interval of the wall portions is less or equal to a depth of the pass-through opening of the cap.

In the above-mentioned structure, by making the interval of the wall portions less or equal to the depth of the pass-through opening of the cap, when the rod passes through the inside of the cap, at least the face of one wall portion inevitably faces the cap. Since the external diameter dimension of the wall portion is approximately the same as the internal diameter dimension of the pass-through opening of the cap, the pass-through opening is blocked by the wall portion, so that the emission of noise which is generated when the piston moves can be restrained.

As for a second aspect of the present invention, as in the first aspect of the present invention, the wall portion may be connected over an entire length of the axial core portion.

In the above-mentioned structure, the wall portion is connected over the entire length of the axial core portion. Specifically, the rod has a column shape (solid shape).

As for a third aspect of the present invention, as in the first aspect of the present invention, the seal member may be an O-ring, the air passageway may comprise an annular groove which is formed on an outer circumferential surface of the piston and movably houses the O-ring, and an orifice which is formed in the annular groove and communicates the air chamber and the atmosphere, and whose flow passage area decreases when the O-ring moves in the rod direction.

In the above-mentioned structure, the annular groove movably housing the O-ring is formed on the outer circumferential surface of the piston. The orifice is formed in this annular groove so as to communicate the air chamber and the atmosphere, and when the O-ring moves in the rod direction, the flow passage area decreases.

Consequently, when the piston is moved backward from an opening portion side of the cylinder, the air inside the air chamber of the cylinder moves to the opening portion side of the cylinder through the air passageway. However, due to friction with the inner circumferential wall of the cylinder, the O-ring moves to a rod side, so that the flow passage area decreases.

On the other hand, when the piston is moved toward the opening portion side from the back of the cylinder, the air on the opening portion side of the cylinder moves to the inside of the air chamber formed by an end surface of the piston and the cylinder through the air passageway. However, due to the friction with the inner circumferential wall of the cylinder, the O-ring moves to the opposite side of the rod, so that the flow passage area increases.

Specifically, when the piston is moved to backward from the opening portion side of the cylinder, compared to the time when the piston is moved to the opening portion side from the back of the cylinder, the flow passage area of the air passageway decreases, so that a flow resistance of the air passing through the air passageway is large, and a damping force applied to the piston increases.

A fourth aspect of the present invention relates to a door handle for a vehicle. The door handle for the vehicle is provided with a lever which is rotatably attached to a main body portion fixed to a door panel of the vehicle for locking or unlocking the door panel, and an urging mechanism urging the lever in a locking direction with respect to the door panel. Also, the door handle for the vehicle includes a first connecting mechanism which connects the cylinder or the rod according to claim 1 to the lever so as to be rotatable, and a second connecting mechanism which connects the rod or the cylinder according to claim 1 to the main body portion so as to be rotatable, and activates a braking force effectively by changing a rotational operation of the lever to a direct acting operation of the rod with the first connecting mechanism.

In the above-mentioned embodiment, the lever is attached to the main body portion fixed to the door panel for the vehicle so as to be rotatable, and due to rotational movements (opening and closing operations) of the lever, the door panel is locked or unlocked. Also, the urging mechanism which urges the lever in the locking direction (closing direction) of the door panel, is provided in the lever.

Thereby, if the lever is opened, an urging force is accumulated in the urging mechanism. However, if the lever is released with an opened state, due to a restoring force by the urging mechanism, the lever is closed.

Here, due to the first connecting mechanism, the cylinder (or the rod) is connected to the lever so as to be rotatable. Also, due to the second connecting mechanism, the rod (or the cylinder) is connected to the main body portion so as to be rotatable, and induces the braking force effectively by changing the rotational operation of the lever to the direct acting operation of the rod with the first connecting mechanism.

Since the lever is attached to the main body portion so as to be rotatable, a movement trajectory of the lever has a circular arc shape. On the other hand, in the air damper, since the piston moves along the cylinder, the movement trajectory of the piston is a straight line. Consequently, in the case that the lever and the rod are connected, if the rod is attempted to be moved by following a turning movement of the lever, the piston happens to interfere with the cylinder. Therefore, by connecting the cylinder or the rod relative to the lever or the main body portion so as to be rotatable by the first connecting mechanism and the second connecting mechanism, the rotational operation of the lever can be converted to the direct acting operation of the rod.

### Effect of the Invention

In the present invention, due to the above-mentioned structure, the external emissions of noise which is generated when the piston moves, can be attenuated.

### Brief Description of the Drawings

Fig. 1 is a perspective view showing a side door where a door handle is provided.
Fig. 2 is a perspective view showing the door handle wherein a damper according to a first embodiment of the present invention is applied in a state viewed from the lower side.
Fig. 3 is an exploded perspective view showing a structure of the damper according to the first embodiment of the present invention.
Fig. 4A is an explanatory view explaining an operation of a piston of the damper according to the first embodiment of the present invention.
Fig. 4B is an explanatory view explaining the operation of the piston of the damper according to the first embodiment of the present invention.
Fig. 5A is a cross sectional view explaining the operation of the damper according to the first embodiment of the present invention.
Fig. 5B is a comparative example of Fig. 5A.
Fig. 6A is a view explaining the operation of the damper according to the first embodiment of the present invention.
Fig. 6B is another view explaining the operation of the damper according to the first embodiment of the present invention.
Fig. 7 is a perspective view showing the structure of the damper according to a second embodiment of the present invention.
Fig. 8 is a cross sectional view showing the structure of the damper according to a third embodiment which is not inventive.
Fig. 9 is a perspective view showing the structure of the damper according to the third embodiment which is not inventive.
Fig. 10 is a perspective view showing the structure of the damper according to a fourth embodiment which is not inventive.

### Best Modes of Carrying out the Invention

The air damper according to embodiments of the present invention will be explained.

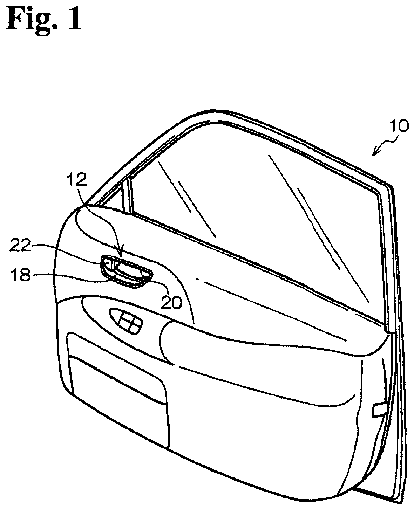

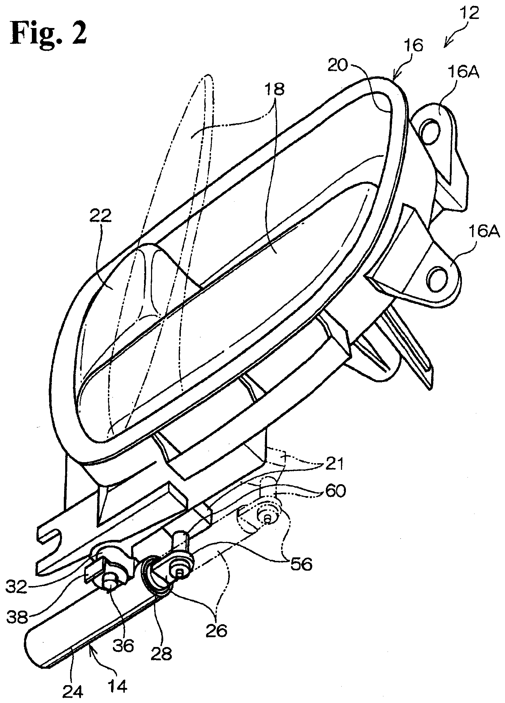

As shown in Figs. 1 and 2, in a side door 10 for an automobile, a door handle 12 for opening and closing the side door 10 is disposed. As an example, an air damper 14 according to the embodiments of the present invention is applied to this door handle 12.

The door handle 12 is divided generally into a main body portion 16 and a lever 18. Fixture pieces 16A project from the main body portion 16, and can be fixed to a vehicle panel (not shown in figures). Also, on the surface of the main body portion 16, a concave portion 20 where the lever 18 can be housed, is depressed. Inside this concave portion 20, a fixture shaft which is not shown in the figures, is provided, and a base portion of the lever 18 is attached to the fixture shaft. With a rotational center on this base portion, the lever 18 is pivotable in a projecting direction (open direction) from the concave portion 20.

Also, in the base portion of the lever 18, a connecting portion 21 is provided on a rear surface side of the lever 18, and pivotally moves in accordance with opening and closing operations of the lever 18 with being integrated with the lever 18. Here, in a bottom portion of the concave portion 20, a pass-through hole (omitted in the figures) is formed, and through the pass-through hole, the connecting portion 21 is disposed on the rear surface side of the main body portion 16.

A door lock mechanism (omitted in the figures) is connected to the connecting portion 21, and by turning the lever 18 in the open direction, the door lock mechanism is released, and the side door 10 can be open.

Also, in the concave portion 20, a lock portion 22 is housed in an upper portion (or lower portion) of a base portion side of the lever 18. This lock portion 22 is pivotal toward a direction (open direction) of projecting from the concave portion 20 at the center of the base portion side of the lever 18.

Due to an operation by a person, vehicle travel or the like, in a case that the door lock mechanism is in a locked state, the movement of the lever 18 in the open direction is controlled, and the side door 10 cannot be open. In such case, by moving the lock portion 22 into the open direction, the locked state of the door lock mechanism can be released.

On the other hand, a torsion spring (omitted in the figures) as an urging mechanism, is placed in the fixture axis inside the concave portion 20, and due to the movement of the lever 18 in the open direction, an urging force is accumulated. Thereby, if one's hand is released from the lever 18 which was moved to the open direction, due to a restoring force of the torsion spring, the lever 18 is urged in a closing direction, and housed inside the concave portion 20.

Here, the air damper 14 is provided in the connecting portion 21. Since the connecting portion 21 moves in accordance with the opening and closing movements of the lever 18, due to the restoring force of the torsion spring, a damping force is provided in the lever 18 which is urged in the closing direction, so that the lever 18 can be quietly moved.

### (First embodiment)

Next, the air damper according to the first embodiment of the present invention will be explained.

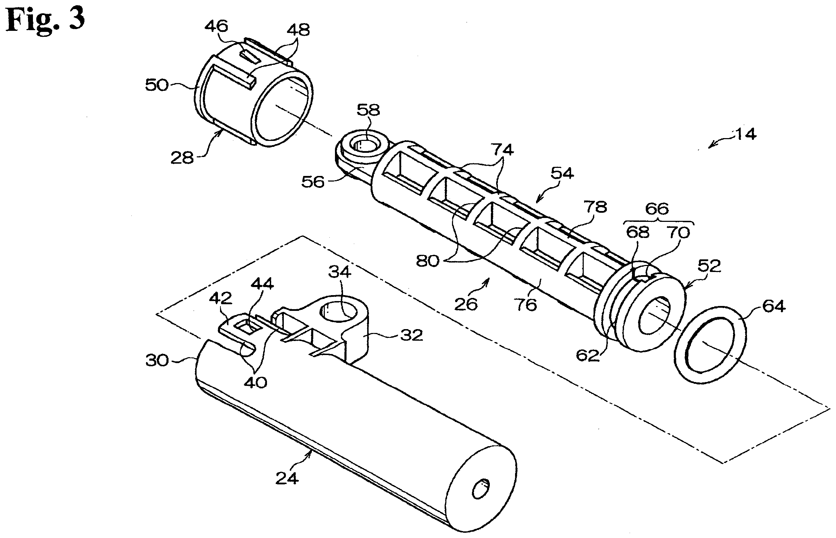

As shown in Fig. 3, this air damper 14 is divided broadly into a cylinder 24, a piston member 26, and a cap 28. The piston member 26 is housed inside the cylinder 24 and is retained by the cap 28.

### (Cylinder)

First, the cylinder 24 will be explained. As shown in Figs. 2, 3, the cylinder 24 has a cylindrical shape with a bottom, and an opening portion 30 is provided in one end portion. A connecting piece (first connecting mechanism) 32 projecting from an outer circumferential surface of the cylinder 24, is provided in an opening portion 30 side of the cylinder 24.

A connecting hole (first connecting mechanism) 34 is formed in the central portion of the connecting piece 32. This connecting hole 34 receives an axial portion (first connecting mechanism) 36 provided on a lower surface side of the main body portion 16. In a state wherein the connecting hole 34 receives the axial portion 36, an E-ring 38 is fitted in place, and due to the E-ring 38, the connecting piece 32 is retained, so that the cylinder 24 cannot be uncoupled from the axial portion 36.

Also, a plurality of slits 40 (here, four) are provided on the opening portion 30 side of the cylinder 24. Locking pieces 42 adjacent one another are provided between the adjacent slits 40. The locking pieces 42 have the same width dimension, and a locking hole 44 is formed in the central portion of a width direction. Through the locking hole 44, the cap 28 can be placed in the cylinder 24.

### (Cap)

Here, the cap 28 will be explained. The cap 28 has an approximately cylindrical shape, and approximately the same external diameter dimension as an internal diameter dimension of the cylinder 24. A locking claw 46 which locks into the locking hole 44 and ribs 48 which is insertable into the slits 40, are projected from an outer circumferential surface of the cap 28. Also, a stopper 50 which is abuttable against an opening end of the cylinder 24 is formed on one end portion of the cap 28.

Due to a positional relation between the slits 40 and the rib 48, if the cap 28 is inserted into the cylinder 24 in a state wherein the cap 28 is positioned relative to a circumferential direction of the cylinder 24, the opening portion 30 side of the cylinder 24 expands the radius due to the slits 40, so that the cap 28 can be smoothly fitted therein. Then, in a state wherein the locking claw 46 of the cap 28 is locked in the locking hole 44, the stopper 50 abuts against the opening end of the cylinder 24, and the movement of the cap 28 is controlled. In this state, the cap 28 is placed on the cylinder 24.

In the meantime, the piston member 26 is insertable into this cylinder 24. After this, piston member 26 is inserted into the cylinder 24, and the cap 28 is placed in the cylinder 24.

### (Piston member)

Next, the piston member 26 will be explained. The piston member 26 is divided into a piston 52 and a rod 54. The piston 52 is provided at one end portion of the rod 54. A connecting piece (second connecting mechanism) 56 is provided at the other end portion of the rod 54. A connecting hole (second connecting mechanism) 58 is formed in the central portion of this connecting piece 56, and the connecting hole 58 receives an axial portion (second connecting mechanism) 60 which is provided on the connecting portion 21.

The piston 52 has an approximately cylindrical shape and a slightly smaller external diameter dimension than the internal diameter dimension of the cylinder 24, and is movable along an inner circumferential wall of the cylinder 24. An annular groove 62 is formed in the central portion of the outer circumferential surface of the piston 52, and an O-ring (seal member) 64 is housed in this annular groove 62. This O-ring 64 projects from the outer circumferential surface of the piston 52 with being housed in the annular groove 62, and when the piston 52 moves, the O-ring 64 slides and contacts the inner circumferential wall of the cylinder 24.

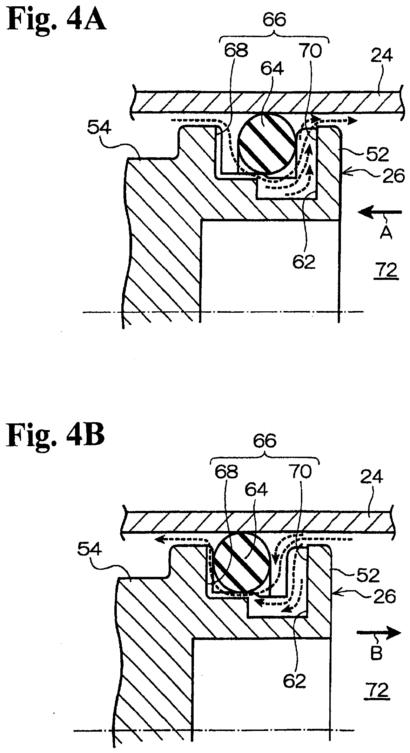

Here, as shown in Figs. 4A, 4B, the width of the annular groove 62 is made larger than a diameter of the O-ring 64, and according to a movement direction of the piston 52, the O-ring 64 is movable inside the annular groove 62. Also, an orifice (air passageway) 66 is formed in the annular groove 62 so as to communicate an air chamber 72 and the atmosphere. This orifice 66 becomes a thin groove 68 on a rod 54 side of the piston 52, and becomes a thick groove 70 on an end surface side of the piston 52.

Consequently, as shown in Fig. 4A, when the piston 52 is moved to the opening portion 30 side from the back of the cylinder 24 (in the direction of arrow A), the O-ring 64 moves to a thick groove 70 side of the annular groove 62. Then, the air on the opening portion 30 side of the cylinder 24 moves to the inside of the air chamber 72 formed by an end surface of the piston 52 and the cylinder 24 through the orifice 66. However, due to a friction with the inner circumferential wall of the cylinder 24, the O-ring 64 moves to the thick groove 70, and the air flows to the thick groove 70 from the thin groove 68 of the orifice 66.

On the other hand, as shown in Fig. 4B, when the piston 52 is moved to the back from the opening portion 30 side of the cylinder 24 (in the direction of arrow B), the O-ring 64 moves to a thin groove 68 side of the annular groove 62. Then, the air inside the air chamber 72 of the cylinder 24 moves to the opening portion 30 side of the cylinder 24 through the orifice 66. However, due to the friction with the inner circumferential wall of the cylinder 24, the O-ring 64 moves to the thin groove 68 side, and the air flows to the thin groove 68 from the thick groove 70 of the orifice 66.

Specifically, when the piston 52 is moved to the back from the opening portion 30 side of the cylinder 24, compared to the time when the piston 52 is moved to the opening portion 30 side from the back of the cylinder 24, a flow passage area of the orifice 66 decreases, so that a flow resistance of the air passing through the orifice 66 is large, and the damping force applied to the piston 52 increases.

On the other hand, as shown in Fig. 3, the rod 54 is provided with a plurality of circular plate portions (wall portions) 74 arranged at a predetermined interval (less or equal to a length of the cap 28) along an axial direction, and each circular plate portion 74 is connected by cross-shaped ribs 76, 78 which mutually intersect. End surfaces of the ribs 76, 78 become one surface with the outer circumferential surface of the circular plate portions 74. Here, the rib 76 is made so as to have a width wider than that of the rib 78. However, the width of the rib 76 and the width of the rib 78 may be the same.

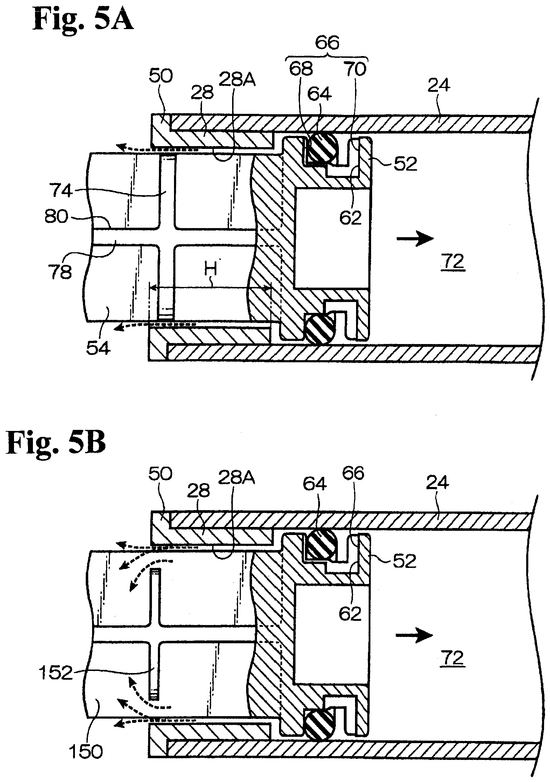

Then, as shown in Fig. 5A, the external diameter dimension of the circular plate portions 74 (external dimension of the ribs 76, 78) is made so as to be smaller than the external diameter dimension of the piston 52, and approximately the same as the internal diameter dimension of the cap 28 (for example, the cap 28 is formed with a plus tolerance, and the rod 54 is formed with a minus tolerance, so that a gap therebetween is eliminated as much as possible).

Specifically, the external diameter dimension of the piston 52 is larger than the internal diameter dimension of the cap 28. Consequently, in a case that the piston 52 is moved in a direction of being extracted from the cylinder 24, the piston 52 abuts against the end surface of the cap 28, and the movement of the piston 52 is controlled.

Next, an operation of the air damper according to the first embodiment of the present invention will be explained.

As shown in Figs. 2 and 3, if the lever 18 is turned in the open direction (shown with imaginary lines), due to a pivotal movement of the connecting portion 21 connected to the lever 18, the piston 52 and the rod 54 move in the direction of being extracted from the cylinder 24 through the axial portion 60 and the connecting piece 56.

Here, since the lever 18 is attached to the main body portion 16 so as to be pivotal, a movement trajectory of the lever 18 has a circular arc shape. On the other hand, in the air damper 14, since the piston 52 moves along the cylinder 24, the movement trajectory of the piston 52 is a straight line.

Specifically, in the case that the lever 18 and the rod 54 are connected, if the rod 54 is attempted to be moved by following a turning movement of the lever 18, the piston 52 interferes with the cylinder 24, so that the piston 52 cannot be smoothly moved.

Consequently, the connecting hole 58 of the connecting piece 56 of the rod 54 is penetrated by the axial portion 60, and the rod 54 is made so as to be rotatable relative to the axial portion 60. Also, the connecting hole 34 of the connecting piece 32 of the cylinder 24 is penetrated by the axial portion 36 on a main body portion 16 side, and the cylinder 24 is made so as to be rotatable relative to the axial portion 36, so that a rotational operation of the lever 18 can be converted to a direct acting operation of the rod 54.

Then, if one's hand is released from the lever 18 in a state where the lever 18 is tuned in the open direction, due to a restoring force of the torsion spring provided in the lever 18, the lever 18 moves in the closing direction. However, due to the movement of this lever 18, the connecting portion 21 turns and moves, and through the axial portion 60 and the connecting piece 56, the piston 52 and the rod 54 move in a direction of being pushed into the cylinder 24 (see Fig. 4B).

Thereby, the air inside the air chamber 72 inside the cylinder 24 is compressed so that a damping effect is applied to the piston member 26. Therefore, the lever 18 can be quietly moved in the closing direction so that a high-end image can be provided for the door handle 12.

Here, when the piston 52 moves inside the cylinder 24, as mentioned above, the air passes through the inside of the orifice 66. However, at this time, due to airflow, turbulence occurs inside the orifice 66, so that a noise happens to be generated.

Consequently, in the present embodiment, as shown in Fig. 5A, the external diameter dimension of the circular plate portions 74 (external dimension of the ribs 76, 78) of the rod 54 is made so as to be approximately the same as the internal diameter dimension of the cap 28. Specifically, the gap between the rod 54 and the cap 28 is made as small as possible.

For example, as shown in Fig. 5B, in the case that the gap is provided between a circular plate portion (wall portion) 152 of a rod 150 and the cap 28, when the piston 52 is pushed into the cylinder 24, a large amount of air is also discharged from the inside of the cylinder 24 through the gap, causing the noise generated in the cylinder 24 to leak to the outside.

On the other hand, as shown in Fig. 5A, in the present invention, since the gap between the rod 54 and the cap 28 is made as small as possible (incidentally, for the sake of convenience of a comparative explanation with Fig. 5B, the gap between the rod 54 and the cap 28 is shown so as to be viewable), when the piston 52 is pushed into the cylinder 24, the leakage of the noise which is generated in the orifice 66 of the moving piston 52 can be effectively restrained.

In the meantime, by providing the circular plate portions 74 along an axial direction of the rod 54, and forming the rod 54 so as to connect each circular plate portion 74 by the cross-shaped rib 76, a thinned section area 80 is provided between the circular plate portion 74 and the circular plate portion 74.

As for a molded article, volume shrinkage after molding occurs. However, in the case that a molded article has an unequal thickness, a thin-walled portion is cooled down at first whereas a thick-walled portion gradually cools down. Consequently, the thin-walled portion quickly shrinks as well, and a material is pulled to the thin-walled portion side, so that the overall shrinkage is concentrated on the thick-walled portion. As a result, a dent occurs on the outer surface of the thick-walled portion, i.e., a shrinkage occurs. In order to prevent such shrinkage, making the molded article with a wall thickness as equal as possible is the common practice. Consequently, in order to make the thick-walled portion thin, an extra thickness is removed (i.e., the thinned section area) by providing a hollow portion in the thick-walled portion and the like.

Specifically, according to the present embodiment, the shrinkage of an outer circumferential wall of the circular plate portions 74 and the ribs 76, 78 is restrained, so that the accuracy of the external diameter dimension of the rod 54 can be enhanced, and the gap between the outer circumferential wall of the rod 54 and the inner circumferential wall of the cap 28 can be made small. Also, by integrally providing the circular plate portions 74 and the ribs 76, 78, the number of parts never increases.

Here, in this embodiment, the gap between the outer circumferential wall of the rod 54 and the inner circumferential wall of the cap 28 is made small. The cylinder 24 requires a length for a stroke of the piston 52, and also forms a shape only whose one end portion has an opening, so that one end side of the cylinder 24 has also a low intensity compared to the other end side of the cylinder 24. Accordingly, it is difficult to provide a dimensional accuracy on the opening portion 30 side in this cylinder 24 when molding.

However, in the case of the cap 28 which retains the piston 52, the length of the cap 28 can be shorter than that of the cylinder 24. Also, since the piston 52 is pierced, one end side and the other end side of the cap 28 have also approximately the same strength, so that the dimensional accuracy can be enhanced compared to that of the cylinder 24. Therefore, the dimensional accuracy required for filling the gap between the cylinder 24 and the piston 52 can be obtained.

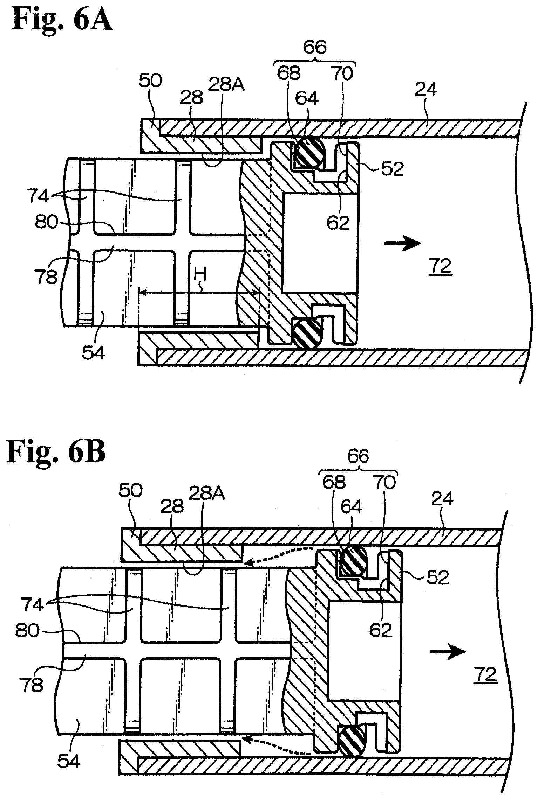

Also, in the present embodiment, as shown in Fig. 5A, the interval between the circular plate portions 74 of the rod 54 is made less or equal to a depth (H) of a pass-through slot 28A of the cap 28. Thereby, as shown in Figs. 6A, 6B, when the rod 54 passes through the inside of the cap 28, at least the face of one circular plate portion 74 inevitably faces the cap 28. Specifically, throughout an entire area of the stroke of the piston 52, the circular plate portions 74 are inevitably disposed inside the pass-through slot 28A of the cap 28.

Since the external dimension diameter of the circular plate portion 74 is approximately the same as the internal diameter dimension of the pass-through slot 28A of the cap 28, throughout the entire area of the stroke of the piston 52, the pass-through slot 28A is blocked by the circular plate portion 74, so that the external emission of noise which is generated by the piston 52 moving inside the cylinder 24, can be effectively restrained.

### (Second embodiment)

Next, the air damper according to a second embodiment of the present invention will be explained. Incidentally, an explanation regarding the content which is approximately the same as that of the first embodiment is omitted.

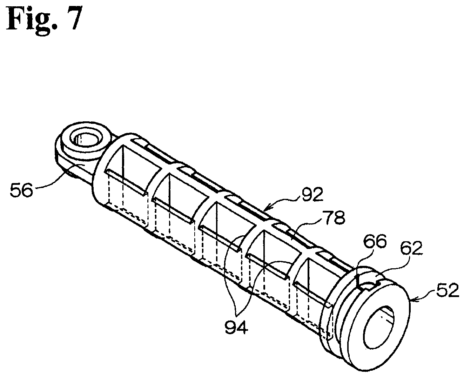

As shown in Fig. 7, a plurality of approximately prismatic pass-through holes 94 piercing in a direction perpendicular to an axial direction of a columnar rod 92, is provided. Thereby, the wall thickness of the rod 92 can be approximately equal, and the sink of the outer circumferential wall of the rod 92 is restrained, so that the accuracy of the external diameter dimension of the rod 92 can be enhanced. Also, other than above, even though it is not shown in the figures, the hollow portion may be provided along the axial direction of the rod.

### (Third embodiment)

Next, the air damper according to a third embodiment will be explained which is not inventive. Incidentally, the explanation regarding the content which is approximately the same as that of the first embodiment is omitted.

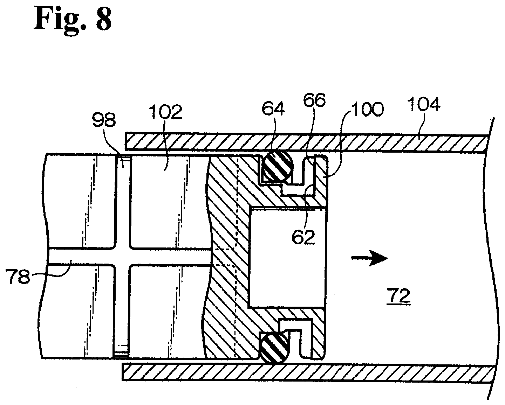

In the first embodiment, the cap 28 is fitted into the inside of the opening portion 30 of the cylinder 24. However, as shown in Fig. 8, provided that a piston 100 and a rod 102 have the same external diameter dimension, the cap is unnecessary. Since opening and closing angles of the lever 18 are determined, the stroke of the piston 100 is determined, so that even without the cap, the piston 100 can never slip out of a cylinder 104.

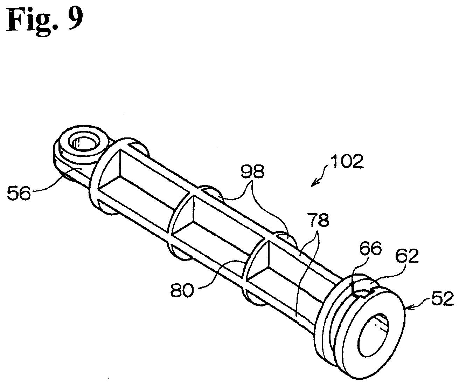

Also, in this case, a gap between an outer circumferential wall of the rod 102 and an inner circumferential wall of the cylinder 104 is made small. Here, since the cap is not used, as shown in Fig. 5A, there is no need to make the interval between the circular plate portions 74 of the rod 54 less or equal to the depth (H) of the pass-through slot 28A of the cap 28. Also, provided that at least one circular plate portion 98 is surely disposed inside the cylinder 104 and on an opening portion side rather than the piston 100, as shown in Fig. 9, the interval of the circular plate portions 98 may be wide in some degree.

### (Fourth embodiment)

Next, the air damper according to a fourth embodiment will be explained which is not inventive. Incidentally, the explanation regarding the content which is approximately the same as that of the first embodiment is omitted.

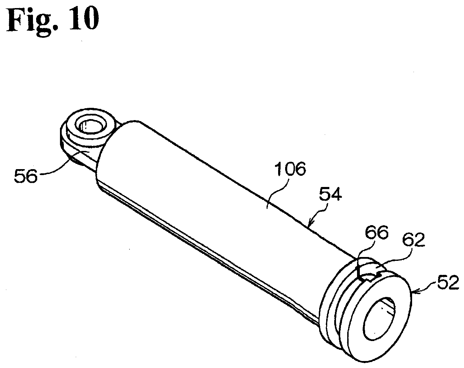

In the first embodiment, as shown in Fig. 3, the thinned section area 80 is provided by providing the circular plate portions 74 along the axial direction of the rod 54 and connecting each circular plate portion 74 by the cross-shaped rib 76, so that the outer circumferential wall of the rod 54 is made so as not to shrink. However, in the case that the rod 54 is processed by abrasion, or the case that the sink is restrained by the selection of materials and the like, as shown in Fig. 10, the shape of a rod 106 may be a column shape.

Also, in the above embodiment, the cap 28 (see Fig. 3) or the cylinder 100 (see Fig. 8) is made with the approximately cylindrical shape, and the internal shape thereof has a round shape. However, an internal shape of the cap 28 and the cylinder 100 is not limited to this, and may be an angular shape. In this case, the shape of the circular plate portion 74 of the rod 54 and the circular plate portion 98 of the rod 102 has a shape which fits into the internal shape of the cap 28 or the cylinder 100.

Also, the damper according to the present invention is not limited to the door handle, and may be used for a lid body of a glove compartment, auto-video equipment and the like.

## Claims

1. An air damper (14), comprising:
a cylinder (24) having an opening portion (30) formed in one end portion;
a piston (52) housed inside said cylinder (24) so as to reciprocate therein, and to compress air inside an air chamber (72) formed inside the cylinder (24);
a rod (54) connected to said piston (52) and exposed from the cylinder (24);
a seal member provided in said piston (52) and sliding and contacting an inner circumferential wall of said cylinder (24) ;
an air passageway provided between said seal member and said piston (52) and mutually communicating a space which is divided by the piston (52);
a cap (28) disposed in the opening portion (30) of said cylinder (24), forming a pass-through opening where said rod (54) can penetrate, and having approximately a same internal dimension of the pass-through opening and an external dimension of the rod (54), wherein said pass-through opening forms an approximately cylindrical shape,
wherein said rod (54) comprises an axial core portion connected to said piston (52) and a plurality of wall portions (74) projecting from said axial core portion and structuring an external shape of the rod (54), and
wherein said wall portions (74) have an approximately circular plate shape, and an external diameter of the wall portions (74) is approximately same as an internal diameter of said pass-through opening,
**characterized in that**
an interval of said wall portions (74) is less than or equal to a depth (H) of the pass-through opening of said cap (28) .

2. An air damper according to claim 1, wherein said wall portions (74) are connected over an entire length of said axial core portion.

3. An air damper according to claim 1, wherein said seal member is an O-ring (64), and
wherein said air passageway is constituted by an annular groove (62) which is formed on an outer circumferential surface of said piston (52) and houses said O-ring (64) so as to be movable, and an orifice (66) which is formed in said annular groove (62) and communicates said air chamber (72) and the atmosphere, and whose flow passage area decreases when the O-ring (64) moves in said rod direction.

4. A door handle (12) for a vehicle with an air damper according to claim 1, comprising:
a lever (18) attached to a main body portion (16) fixed to a door panel for the vehicle so as to be rotatable, and to lock or unlock said door panel,
an urging mechanism urging said lever (18) in a locking direction of said door panel,
a first connecting mechanism which connects the cylinder (24) or the rod (54) according to claim 1 to said lever (18) so as to be rotatable, and
a second connecting mechanism which connects the rod (54) or the cylinder (24) according to claim 1 to said main body portion (16) so as to be rotatable, and activates a braking force effectively by changing a rotational operation of said lever (18) to a direct acting operation of the rod (54) with said first connecting mechanism.

## Patentansprüche

1. Luftdämpfer (14), Folgendes umfassend:
einen Zylinder (24) mit einem in einem Endabschnitt ausgebildeten Öffnungsabschnitt (30);
einen Kolben (52), der in dem Zylinder (24) hin und her bewegbar untergebracht ist, um Luft innerhalb einer innerhalb des Zylinders (24) ausgebildeten Luftkammer (72) zu komprimieren;
eine Stange (54), die mit dem Kolben (52) verbunden und von dem Zylinder (24) freigelegt ist;
ein Dichtungselement, das in dem Kolben (52) bereitgestellt ist und eine innere Umfangswand des Zylinders (24) gleitend berührt;
einen Luftdurchgang, der zwischen dem Dichtungselement und dem Kolben (52) bereitgestellt ist und einen Raum, der durch den Kolben (52) geteilt ist, untereinander verbindet;
eine in dem Öffnungsabschnitt (30) des Zylinders (24) angeordnete Kappe (28), die eine Durchgangsöffnung bildet, in die die Stange (54) eindringen kann, und die in etwa die gleiche Innenabmessung der Durchgangsöffnung und die Außenabmessung der Stange (54) aufweist, wobei die Durchgangsöffnung eine in etwa zylindrische Form aufweist,
wobei die Stange (54) einen mit dem Kolben (52) verbundenen axialen Kernabschnitt und eine Vielzahl von Wandabschnitten (74) umfasst, die von dem axialen Kernabschnitt abstehen und die Außenform der Stange (54) bilden, und
wobei die Wandabschnitte (74) eine in etwa kreisförmige Plattenform aufweisen und der Außendurchmesser der Wandabschnitte (74) in etwa gleich dem Innendurchmesser der Durchgangsöffnung ist,
**dadurch gekennzeichnet, dass**
der Abstand der Wandabschnitte (74) kleiner als oder gleich wie die Tiefe (H) der Durchgangsöffnung der Kappe (28) ist.

2. Luftdämpfer nach Anspruch 1, wobei die Wandabschnitte (74) über die gesamte Länge des axialen Kernabschnitts verbunden sind.

3. Luftdämpfer nach Anspruch 1, wobei das Dichtungselement ein O-Ring (64) ist, und
wobei der Luftdurchgang aus einer Ringnut (62), die auf einer äußeren Umfangsfläche des Kolbens (52) ausgebildet ist und den O-Ring (64) beweglich aufnimmt, und einer Öffnung (66), die in der Ringnut (62) ausgebildet ist und die Luftkammer (72) und die Atmosphäre verbindet, und deren Strömungskanalfläche abnimmt, wenn sich der O-Ring (64) entlang der Stangenrichtung bewegt, besteht.

4. Türgriff (12) für ein Fahrzeug mit einem Luftdämpfer nach Anspruch 1, umfassend:
einen Hebel (18), der an einem Karosserieabschnitt (16) befestigt ist, der an einer Türverkleidung für das Fahrzeug befestigt ist, so dass er drehbar ist und die Türverkleidung verriegelt oder entriegelt,
einen drängenden Mechanismus, der den Hebel (18) in eine Verriegelungsrichtung der Türverkleidung drängt,
einen ersten Verbindungsmechanismus, der den Zylinder (24) oder die Stange (54) nach Anspruch 1 mit dem Hebel (18) drehbar verbindet, und
einen zweiten Verbindungsmechanismus, der die Stange (54) oder den Zylinder (24) nach Anspruch 1 mit dem Karosserieabschnitt (16) drehbar verbindet und eine Bremskraft wirksam aktiviert, indem er eine Drehbetätigung des Hebels (18) in eine direkt wirkende Betätigung der Stange (54) mit dem ersten Verbindungsmechanismus umwandelt.

## Revendications

1. Amortisseur pneumatique (14) comprenant :
un cylindre (24) comportant une partie d'ouverture (30) formée dans une partie d'extrémité ;
un piston (52) logé à l'intérieur dudit cylindre (24) de manière à y actionner un mouvement alternatif, et de manière à comprimer de l'air à l'intérieur d'une chambre d'air (72) formée à l'intérieur du cylindre (24) ;
une tige (54) reliée audit piston (52) et exposée à partir du cylindre (24) ;
un élément d'étanchéité ménagé dans ledit piston (52) et coulissant et entrant en contact avec une paroi circonférentielle intérieure dudit cylindre (24) ;
un passage d'air ménagé entre ledit élément d'étanchéité et ledit piston (52) et faisant communiquer entre eux un espace qui est divisé par le piston (52) ;
un couvercle (28) placé dans la partie d'ouverture (30) dudit cylindre (24), formant une ouverture de passage où ladite tige (54) peut pénétrer, et ayant approximativement une dimension interne identique de l'ouverture de passage et une dimension externe de la tige (54), en ce que ladite ouverture de passage réalise une forme approximativement cylindrique,
en ce que ladite tige (54) comporte une partie centrale axiale reliée audit piston (52) et une pluralité de parties de paroi (74) faisant saillie de ladite partie centrale axiale et structurant une forme externe de la tige (54), et
en ce que lesdites parties de paroi (74) ont approximativement une forme de plaque circulaire, et un diamètre externe des parties de paroi (74) est approximativement identique au diamètre interne de ladite ouverture de passage,
**caractérisé en ce qu'**
un intervalle desdites parties de paroi (74) est inférieur ou égal à une profondeur (H) de l'ouverture de passage dudit couvercle (28).

2. Amortisseur pneumatique selon la revendication 1, en ce que lesdites parties de paroi (74) sont reliées sur toute une longueur de ladite partie centrale axiale.

3. Amortisseur pneumatique selon la revendication 1, en ce que ledit élément d'étanchéité est un joint torique (64), et
en ce que ledit passage d'air est constitué par une rainure annulaire (62) qui est formée sur une surface circonférentielle extérieure dudit piston (52) et loge ledit joint torique (64) de manière à être mobile, et un orifice (66) qui est formé dans ladite rainure annulaire (62) et qui fait communiquer ladite chambre d'air (72) et l'atmosphère et dont la zone de passage d'écoulement décroît lorsque le joint torique (64) se déplace dans ladite direction de la tige.

4. Poignée de porte (12) pour un véhicule avec un amortisseur pneumatique selon la revendication 1, comprenant :
un levier (18) fixé à une partie de corps principal (16) montée sur un panneau de porte pour le véhicule de manière à pouvoir tourner, et de manière à verrouiller ou déverrouiller ledit panneau de porte,
un mécanisme de poussée poussant ledit levier (18) dans un sens de verrouillage dudit panneau de porte,
un premier mécanisme de liaison qui relie le cylindre (24) ou la tige (54) selon la revendication 1 audit levier (18) de manière à pouvoir tourner, et
un second mécanisme de liaison qui relie la tige (54) ou le cylindre (24) selon la revendication 1 à ladite partie de corps principal (16) de manière à pouvoir tourner, et active une force de freinage effectivement en modifiant une opération de rotation dudit levier (18) en une opération d'actionnement direct de la tige (54) avec ledit premier mécanisme de liaison.
